# EUROPEAN PATENT APPLICATION

(11) **EP 4 628 301 A1**
(43) Date of publication of application: **08.10.2025**
(21) Application number: 23897694.8
(22) Date of filing: 24.11.2023
(51) Int. Cl.: B32B 27/32, B65D 65/40

(54) **LAMINATED BODY, MELT-KNEADED PRODUCT, AND METHOD FOR OBTAINING MELT-KNEADED PRODUCT**

(30) Priority: 30.11.2022 JP 2022191292
(71) Applicant: Sumitomo Chemical Company, Limited, Tokyo 103-6020 (JP)
(72) Inventor: KAWAKAMI, Eiko, Chuo-ku, Tokyo 103-6020 (JP); IGAWA, Nao, Ichihara-shi, Chiba 299-0195 (JP)
(74) Representative: Winter, Brandl - Partnerschaft mbB
(86) International application number: PCT/JP2023/042210
(87) International publication number: WO 2024/117046

(57) **Abstract**

Provided are: a laminated body whereby it is possible to obtain a recycled material that, after recycling, is relatively favorable in terms of tensile fracture strength, tensile fracture elongation, and heat-sealing peel strength; a melt-kneaded product obtained by melt-kneading the laminated body; and a method for obtaining the melt-kneaded product.

The laminated body according to the present invention is formed by laminating a substrate layer, an adhesive layer, and a sealant layer in this order.

The elastic modulus of the adhesive layer is 10,000 Pa at a temperature of 60°C or higher and 200°C or less.

The substrate layer comprises polyethylene having a density of 936 kg/m³ or higher and 980 kg/m³ or less, and is subjected to orientation processing.

The sealant layer comprises polyethylene having a density of 880 kg/m³ or higher and less than 910 kg/m³.

## Description

### TECHNICAL FIELD

The present invention relates to a laminated body, a melt-kneaded product, and a method for obtaining the melt-kneaded product.

### BACKGROUND ART

In May 2019, the Ministry of the Environment formulated "Plastic Resource Circulation Strategy", which stipulates that used plastics are effectively utilized by, for instance, 100% reuse or recycling by 2035. Under such a social situation, the demand for resin packaging materials suitable for material recycling is expected to further increase.

For example, a plastic (resin) film is frequently used as a laminated body including a plurality of layers having various functions. Such a laminated body is used for a single-use resin packaging material or the like. As an example, the laminated body constituting the resin packaging material is formed by laminating a substrate layer formed of a resin film (e.g., a stretched nylon film, a polyethylene terephthalate (PET) film) and a metal (e.g., aluminum) film, and a sealant layer containing, for instance, a polyethylene film. Here, the substrate layer and the sealant layer may be laminated with, for instance, an adhesive interposed therebetween.

In material recycling, a laminated body including a substrate layer formed of a resin (e.g., nylon, polyethylene terephthalate (PET)) and a sealant layer formed of a polyethylene resin or the like has a problem that separation and collection are difficult because resins constituting the respective layers are different.

In order to solve this problem, a laminated body has been known that uses the same kind of resin as the resin constituting each layer. For example, Patent Document 1 describes a film having a multilayer structure including: a biaxially oriented polyethylene film containing a linear low-density polyethylene having a predetermined density; an adhesive layer; and a sealant film, wherein the biaxially oriented polyethylene film has an ultimate tensile strength of at least 60 MPa in at least one of a longitudinal direction and a lateral direction, the sealant film has an ultimate elongation of at least 300%, and the ultimate tensile strength is less than 50 MPa in at least one of the longitudinal direction and the lateral direction.

### PRIOR ART DOCUMENTS

### PATENT DOCUMENTS

Patent Document 1: JP-A-2018-520908

### SUMMARY OF THE INVENTION

### PROBLEMS TO BE SOLVED BY THE INVENTION

However, when the film having a multilayer structure as described in Patent Document 1 is recycled and used as a recycled material, the tensile fracture strength, tensile fracture elongation, and heat-sealing peel strength of the recycled material are insufficient.

The present invention has been made in light of such a situation and has addressed the problem of providing a laminated body whereby it is possible to obtain a recycled material that, after recycling, is relatively favorable in terms of tensile fracture strength, tensile fracture elongation, and heat-sealing peel strength; a melt-kneaded product obtained by melt-kneading the laminated body; and a method for obtaining the melt-kneaded product.

### MEANS FOR SOLVING THE PROBLEMS

The laminated body according to the present invention is formed by laminating a substrate layer, an adhesive layer, and a sealant layer in this order.

The adhesive layer has an adhesive layer elastic modulus of 10,000 Pa at a temperature of 60°C or higher and 200°C or less;
the substrate layer comprises a polyethylene having a density of 936 kg/m³ or higher and 980 kg/m³ or less, and is subjected to orientation processing; and
the sealant layer comprises polyethylene having a density of 880 kg/m³ or higher and less than 910 kg/m³.

The melt-kneaded product in the present invention can be obtained by melt-kneading the above laminated body.

In the method for obtaining a melt-kneaded product according to the present invention, the above laminated body is melt-kneaded.

### EFFECT OF THE INVENTION

The present invention can provide: a laminated body whereby it is possible to obtain a recycled material that, after recycling, is relatively favorable in terms of tensile fracture strength, tensile fracture elongation, and heat-sealing peel strength; a melt-kneaded product obtained by melt-kneading the laminated body; and a method for obtaining the melt-kneaded product.

### MODE FOR CARRYING OUT THE INVENTION

Hereinafter, embodiments of the present invention will be described, but the present invention is not limited to the following embodiments. The present invention is not limited to each configuration described below, and various modifications can be made within the scope shown in the Claims, and embodiments and examples obtained by appropriately combining technical means disclosed in different embodiments and examples are also included in the technical scope of the present invention. As used herein, unless otherwise specified, "A to B" representing a numerical range means "A or more and B or less".

The laminated body according to this embodiment is formed by laminating a substrate layer, an adhesive layer, and a sealant layer in this order.

### <Substrate layer>

The substrate layer of the laminated body in this embodiment is made of polyethylene having a density of 936 kg/m³ or more and 980 kg/m³ or less, and is subjected to orientation processing.

The density of polyethylene used for the substrate layer is 936 kg/m³ or more and 980 kg/m³ or less. The density is preferably 940 kg/m³ or more and 970 kg/m³ or less, and more preferably 945 kg/m³ or more and 965 kg/m³ or less from the viewpoint of improving rigidity and film formability.

The polyethylene contains an ethylene-based polymer. Examples of the ethylene-based polymer include an ethylene homopolymer, a copolymer of ethylene and α-olefin, or a copolymer of ethylene and α-olefin substituted with an alicyclic compound. Here, the ethylene-based polymer may be a mixture of an ethylene homopolymer and a copolymer of ethylene and α-olefin. In addition, the amount of the structural unit derived from α-olefin in the ethylene-based polymer is not particularly limited, and may be, for example, from 4.0 to 20 mass%.

Examples of the ethylene homopolymer include a high-density polyethylene (HDPE). Examples of the production method include a production method in which ethylene and a C₃₋₁₂ α-olefin are polymerized by a known polymerization process using a known catalyst. Examples of the known catalyst include a Ziegler-Natta catalyst, and examples of the known polymerization process include a gas phase-solid phase polymerization process, a liquid phase-solid phase polymerization process, or a homogeneous liquid phase polymerization process in the presence or absence of a solvent. The polymerization temperature is usually from 30 to 300°C, and the polymerization pressure is usually from normal pressure to 300 MPa.

Examples of the copolymer of ethylene and α-olefin include a linear low-density crystalline polyethylene or an elastomer of a copolymer of ethylene and α-olefin as characterized by low crystallinity and rubber-like elasticity.

Examples of the α-olefin include a C₃₋₁₀ α-olefin. Examples of the C₃₋₁₀ α-olefin include propylene, 1-butene, 1-pentene, 1-hexene, 4-methyl-1 pentene, 1-octene, 1-decene, or 3-methyl-1-butene. Preferred is a C₄₋₁₀ α-olefin, and more preferred is 1-butene, 1-hexene, or 1-octene.

Examples of the copolymer of ethylene and α-olefin include an ethylene-1-butene copolymer, an ethylene-1-hexene copolymer, an ethylene-1-octene copolymer, an ethylene-1-decene copolymer, or an ethylene-(3-methyl -1-butene) copolymer. In addition, one kind of the copolymer of ethylene and α-olefin may be used singly, or a mixture of two or more thereof may be used.

Examples of the α-olefin substituted with an alicyclic compound include vinylcyclohexane.

The melt flow rate (MFR) of the ethylene-based polymer is preferably from 0.5 to 50 g/10 min, more preferably from 1 to 30 g/10 min, and still more preferably from 1 to 20 g/10 min. Note that the MFR is measured by Method A prescribed in JIS K 7210-1-2014 under conditions at a temperature of 190°C and a load of 2.16 kg.

The ethylene-based polymer can be produced by a known polymerization process using a known polymerization catalyst.

Examples of the polymerization catalyst include a homogeneous catalyst system represented by a metallocene catalyst, a Ziegler-type catalyst system, or a Ziegler-Natta catalyst system. Examples of the homogeneous catalyst system include: (i) a catalyst system including a cyclopentadienyl ring-containing transition metal (group 4 of the periodic table) compound; (ii) a catalyst system including a cyclopentadienyl ring-containing transition metal (group 4 of the periodic table) compound, a compound that reacts with the transition metal compound to form an ionic complex, and an organoaluminum compound; (iii) a catalyst system including a modified inorganic (e.g., silica, clay minerals) particle carrying catalyst components such as a cyclopentadienyl ring-containing transition metal (group 4 of the periodic table) compound, a compound to form an ionic complex, and an organoaluminum compound; (iv) a prepolymerization catalyst system prepared by prepolymerizing ethylene, α-olefin, or the like in the presence of the above catalyst system.

In addition, a radical initiator can be used as a polymerization catalyst for a high-pressure low-density polyethylene (LDPE).

The polyethylene used for the substrate layer is polyethylene subjected to orientation processing. The orientation processing applied to the polyethylene is uniaxially stretched or biaxially stretched processing along the MD direction. It is also possible to perform orientation during film formation or orientation in a separate step after film formation. As long as the film is a stretched film, the film may be a single-layer stretched film or a multilayer stretched film. The orientation ratio of the substrate layer is preferably 2 times or more, and more preferably 5 times or more from the viewpoint of enhancing the rigidity of the film. In addition, the orientation ratio of the substrate layer is preferably 20 times or less, and more preferably 15 times or less from the viewpoint of improving processability.

### <Adhesive layer>

In the adhesive layer of the laminated body according to the present embodiment, the temperature at which the elastic modulus of the adhesive layer is 10,000 Pa is 60°C or more and 200°C or less. The temperature at which the elastic modulus of the adhesive layer is 10,000 Pa is preferably 90°C or more and 190°C or less, and more preferably 140°C or more and 180°C or less from the viewpoint of improving dispersibility and heat resistance. The dynamic elastic modulus of the adhesive layer at each temperature may be measured by a known procedure. The dynamic viscoelasticity of the adhesive layer may be measured using, for example, a dynamic viscoelasticity measuring device.

The adhesive layer is preferably an adhesive layer of any of an epoxy-based adhesive layer, an acrylic adhesive layer, a urethane-based adhesive layer, or a silicone-based adhesive layer. The adhesive layer may be formed of an aqueous type or a solvent type adhesive for dry lamination, or may be formed of a solventless adhesive for lamination. In addition, the adhesive layer may be formed of an adhesive containing an inorganic compound.

Examples of the epoxy-based adhesive used for the epoxy-based adhesive layer include MAXIVE C93T (registered trademark) (manufactured by MITSUBISHI GAS CHEMICAL COMPANY, INC.) or MAXIVE M-100 (registered trademark) (manufactured by MITSUBISHI GAS CHEMICAL COMPANY, INC.).

Examples of the acrylic adhesive used for the acrylic adhesive layer include ORIBAIN 5448 (registered trademark) (manufactured by TOYOCHEM CO., LTD.).

Examples of the urethane-based adhesive used for the urethane-based adhesive layer include a polyether-based polyurethane adhesive or a polyester-based polyurethane adhesive. Examples of the polyurethane-based adhesive include TAKELAC (registered trademark) (manufactured by Mitsui Chemicals, Inc.) or TAKENATE (registered trademark) (manufactured by Mitsui Chemicals, Inc.).

Examples of the silicone-based adhesive used for the silicone-based adhesive layer include KR-3704 (registered trademark) (manufactured by Shin-Etsu Chemical Co., Ltd.).

### <Sealant Layer>

The sealant layer of the laminated body in this embodiment is made of polyethylene having a density of 880 kg/m³ or more and less than 910 kg/m³.

The density of the polyethylene used in the sealant layer is 880 kg/m³ or more and less than 910 kg/m³. The density is preferably 885 kg/m³ or more and 908 kg/m³ or less, and more preferably 890 kg/m³ or more and 905 kg/m³ or less from the viewpoint of improving the low-temperature sealability and the film formability.

The polyethylene contains an ethylene-based polymer. Examples of the ethylene-based polymer include an ethylene homopolymer, a copolymer of ethylene and α-olefin, or a copolymer of ethylene and α-olefin substituted with an alicyclic compound. Here, the ethylene-based polymer may be a mixture of an ethylene homopolymer and a copolymer of ethylene and α-olefin. In addition, the amount of the structural unit derived from α-olefin in the ethylene-based polymer is not particularly limited, and may be, for example, from 4.0 to 20 mass%.

Examples of the ethylene homopolymer include a high-pressure low-density polyethylene (LDPE) produced by high-pressure radical polymerization using a radical initiator. The high-pressure low-density polyethylene (LDPE) is one in which ethylene of a repeating unit is randomly bonded with a branched structure. In addition, the high-pressure low-density polyethylene (LDPE) may have a density of, for example, 910 to 935 kg/m³.

Examples of the copolymer of ethylene and α-olefin include a linear low-density crystalline polyethylene or an elastomer of a copolymer of ethylene and α-olefin as characterized by low crystallinity and rubber-like elasticity.

Examples of the α-olefin include a C₃₋₁₀ α-olefin. Examples of the C₃₋₁₀ α-olefin include propylene, 1-butene, 1-pentene, 1-hexene, 4-methyl-1 pentene, 1-octene, 1-decene, or 3-methyl-1-butene. Preferred is a C₄₋₁₀ α-olefin, and more preferred is 1-butene, 1-hexene, or 1-octene.

Examples of the copolymer of ethylene and α-olefin include an ethylene-1-butene copolymer, an ethylene-1-hexene copolymer, an ethylene-1-octene copolymer, an ethylene-1-decene copolymer, or an ethylene-(3-methyl -1-butene) copolymer. In addition, one kind of the copolymer of ethylene and α-olefin may be used singly, or a mixture of two or more thereof may be used.

Examples of the α-olefin substituted with an alicyclic compound include vinylcyclohexane.

The melt flow rate (MFR) of the polyethylene used in the sealant layer is preferably 0.01 g/10 min or more and less than 5 g/10 min. The MFR is more preferably 0.1 g/10 min or more, and still more preferably 0.5 g/10 min or more. Further, the MFR is more preferably less than 4.0 g/10 min, still more preferably 3.5 g/10 min or less, and particularly preferably 2 g/10 min or less. Note that the MFR is measured by Method A prescribed in JIS K 7210-1-2014 under conditions at a temperature of 190°C and a load of 2.16 kg.

The ethylene-based polymer can be produced by a known polymerization process using a known polymerization catalyst.

Examples of the polymerization catalyst include a homogeneous catalyst system represented by a metallocene catalyst, a Ziegler-type catalyst system, or a Ziegler-Natta catalyst system. Examples of the homogeneous catalyst system include: (i) a catalyst system including a cyclopentadienyl ring-containing transition metal (group 4 of the periodic table) compound; (ii) a catalyst system including a cyclopentadienyl ring-containing transition metal (group 4 of the periodic table) compound, a compound that reacts with the transition metal compound to form an ionic complex, and an organoaluminum compound; (iii) a catalyst system including a modified inorganic (e.g., silica, clay minerals) particle carrying catalyst components such as a cyclopentadienyl ring-containing transition metal (group 4 of the periodic table) compound, a compound to form an ionic complex, and an organoaluminum compound; (iv) a prepolymerization catalyst system prepared by prepolymerizing ethylene, α-olefin, or the like in the presence of the above catalyst system.

In addition, a radical initiator can be used as a polymerization catalyst for a high-pressure low-density polyethylene (LDPE).

The sealant layer of the laminated body in this embodiment has a thickness of preferably 10 µm or more and 200 µm or less. The thickness of the sealant layer is more preferably 30 µm or more and 180 µm or less, and still more preferably 50 µm or more and 150 µm or less from the viewpoint of improving the strength.

### <Laminated body>

The laminated body according to this embodiment is a laminated body formed by laminating a substrate layer, an adhesive layer, and a sealant layer in this order. The laminated body can be produced, for example, by a production method using, for instance, a dry lamination process or an extrusion lamination process.

The method for producing the substrate layer and the sealant layer is not particularly limited, and examples thereof include a known method for producing a film. Examples of the known method for producing a film include extrusion molding methods such as an inflation method using an inflation film producing apparatus and a T-die method using a T-die cast film producing apparatus.

When the T-die method is used, the processing resin temperature is from 180°C to 300°C and preferably from 200°C to 300°C. In addition, the chill roll temperature is from 20°C to 80°C and preferably from 20°C to 60°C. When the inflation method is used, the resin-processing temperature is from 180°C to 300°C and preferably from 230°C to 300°C. In addition, the chill roll temperature is from 20°C to 80°C and preferably from 20°C to 50°C. A pressure-sensitive adhesive such as polybutene may be added to the resin composition for forming layer A, layer B, and layer C. Examples of the method for adding polybutene include a method of using a raw material obtained by compounding polybutene in advance with, for instance, a Banbury kneader or a method of injecting polybutene into an extruder. The concentration of polybutene is from 0.5 to 20 mass%, and polybutene may be added to all three layers, only both outer layers (layer A and layer C), or only the intermediate layer (layer B). The polybutene used may be a commercially available product such as HV35 manufactured by Nippon Petrochemical Co., Ltd., or polybutene 100H manufactured by Idemitsu Petrochemical Co., Ltd.

The laminated body according to this embodiment may include a barrier layer. The barrier layer is a layer that prevents permeation of gases such as oxygen and water vapor. Examples of the barrier layer include a metal oxide layer formed by vapor-depositing an inorganic compound, a layer formed of a composition containing an inorganic layered compound and a polyvinyl alcohol-based resin, or a layer formed of EVOH.

Examples of the layer formed by vapor-depositing an inorganic compound include a layer formed of silicon oxide, alumina, spinel, or the like.

Examples of the inorganic layered compound include a kaolinite group, a smectite group, or a mica group. The inorganic layered compound is preferably a smectite group such as a layered silicate mineral, hectorite, or saponite since the inorganic layered compound easily takes in a resin between layers thereof to form a composite. Among them, the smectite group is preferably a layered silicate mineral because it can impart a high oxygen gas barrier property.

The polyvinyl alcohol-based resin is a polymer having a structural unit derived from vinyl alcohol as a main component. Examples of such "polyvinyl alcohol" include a polymer obtained by hydrolyzing an acetate portion of a vinyl acetate polymer or a polymer obtained by hydrolyzing, for instance, a trifluorovinyl acetate polymer, a vinyl formate polymer, a vinyl pivalate polymer, a t-butyl vinyl ether polymer, or a trimethylsilyl vinyl ether polymer (For details of "polyvinyl alcohol", see, for example, "World of PVA", edited by POVAL Association, 1992, Polymer Publishing Co., Ltd.; Nagano et al., "POVAL", 1981, Polymer Publishing Co., Ltd.).

The degree of "saponification" of the ester moiety of the polymer is preferably 70 mol% or more, more preferably 85 mol% or more, and still more preferably 98 mol% or more. The polymerization degree of the polymer to be used is preferably 100 or more and 5000 or less, and more preferably 200 or more and 3000 or less.

In addition, the vinyl alcohol may be what is called a vinyl alcohol derivative having a functional group other than a hydroxyl group. Examples of the functional group other than a hydroxyl group include an amino group, a thiol group, a carboxyl group, a sulfonic acid group, a phosphoric acid group, a carboxylate group, a sulfonic acid ion group, a phosphoric acid ion group, an ammonium group, a phosphonium group, a silyl group, a siloxane group, an alkyl group, an allyl group, a fluoroalkyl group, an alkoxy group, a carbonyl group, or a halogen group.

The polyvinyl alcohol-based resin may be a copolymer containing a structural unit derived from vinyl alcohol and a structural unit derived from α-olefin such as ethylene or propylene. When the polyvinyl alcohol-based resin is a copolymer, the content of the structural unit derived from α-olefin contained in the copolymer is preferably 40 mol% or less, and more preferably 15 mol% or less, from the viewpoint of solubility in an aqueous solvent.

### <Recycling method>

The laminated body according to the present embodiment can be collected and recycled after being used as, for example, a container for foods, detergents, cosmetics, or the like. The laminated body may be recycled by, for example, washing a container recovered using a solvent (e.g., alcohol), and drying, melting, and then pelletizing the container. The melting and pelletizing of the container can be carried out without separating all the layers of the laminated film.

Examples of the method for melting and pelletizing the container include a melt-kneading method using various mixers such as a uniaxial kneader, a biaxial kneader, a Banbury mixer, and a heat roll. The mixer used in the melt-kneading method is preferably a uniaxial kneader or a biaxial kneader.

### <Melt-kneaded product and method for obtaining melt-kneaded product>

The melt-kneaded product in this embodiment can be obtained by melt-kneading the laminated body of this embodiment. In addition, the method for obtaining a melt-kneaded product according to this embodiment includes melt-kneading the laminated body of this embodiment.

In order to obtain the melt-kneaded product in this embodiment, the temperature at which the laminated body or the container formed of the laminated body is melt-kneaded is preferably 140°C or higher and 300°C or lower, and more preferably 150°C or higher and 280°C or lower from the viewpoint of suppressing thermal degradation.

The melt-kneaded product obtained by melt-kneading the laminated body of this embodiment can be used as a recycled material. The recycled material is a recycled material having relatively good post-recycling tensile fracture strength, tensile fracture elongation, and heat-sealing peel strength. Therefore, the laminated body according to this embodiment is a laminated body suitable for recycling.

The recycled material can be used as a material for forming various films. The film formed using the recycled material can be suitably used as, for example, a packaging bag and a packaging container for storing foods, detergents, cosmetics, or the like.

In addition, a multilayer film obtained by laminating a film formed using the recycled material as a substrate film and a film formed from the same type of olefinic polymer as the substrate film as a sealant film can be suitably used as a monomaterial packaging material that can be reused without separating the substrate film and the sealant film.

Further, a film formed using the recycled material may be used as the above-mentioned base material film. At this time, the film can be suitably used as a packaging bag and a packaging container without laminating, for example, a film (e.g., a polyethylene terephthalate (PET) film, a polyamide film) on a base material film.

The film formed using the recycled material can be used as, for example, a container for foods, detergents, cosmetics, or the like, collected, and then recycled. The film may be recycled by, for example, washing a container recovered using a solvent such as alcohol, and drying, melting, and then pelletizing the container. The melting and pelletizing of the container can be carried out without separating all the layers of the multilayer film. The recycled resin material can be suitably used, for example, as a molding material for food, detergent, and cosmetic applications.

The method for producing a film using the recycled material is not particularly limited, and examples thereof include a known method for producing a film. Examples of the known method for producing a film include extrusion molding methods such as an inflation method using an inflation film producing apparatus and a T-die method using a T-die cast film producing apparatus. When the T-die method is used, the processing resin temperature is from 180°C to 300°C and preferably from 200°C to 300°C. In addition, the chill roll temperature is from 20°C to 80°C and preferably from 20°C to 60°C.

The present invention is not limited to the above-described embodiments, and various modifications can be made within the scope shown in the Claims, and embodiments obtained by appropriately combining technical means disclosed in different embodiments are also included in the technical scope of the present invention.

The present invention includes the following items.
[1] A laminated body comprising a substrate layer, an adhesive layer, and a sealant layer laminated in this order, wherein
   the adhesive layer has a temperature at which the elastic modulus of the adhesive layer becomes 10,000 Pa is 60°C or higher and 200°C or lower,
   the substrate layer comprises polyethylene having a density of 936 kg/m³ or higher and 980 kg/m³ or less, and is subjected to orientation processing, and
   the sealant layer comprises polyethylene having a density of 880 kg/m³ or higher and less than 910 kg/m³.
[2] The laminated body according to [1], wherein the adhesive layer is any one of an epoxy-based adhesive layer, an acrylic adhesive layer, a urethane-based adhesive layer, or a silicone-based adhesive layer.
[3] The laminated body according to [1] or [2], wherein the sealant layer has a thickness of 10 µm or more and 200 µm or less.
[4] The laminated body according to any one of [1] to [3], wherein the sealant layer comprises polyethylene having a melt flow rate of 0.01 g/10 min or more and less than 5 g/10 min as measured at a temperature of 190°C under a load of 2.16 kg.
[5] A melt-kneaded product obtained by melt-kneading the laminated body according to any one of [1] to [4].
[6] A method for obtaining a melt-kneaded product by melt-kneading the laminated body according to any one of [1] to [4].

### EXAMPLES

Hereinafter, the present invention will be described more specifically with reference to Examples. However, the present invention is not limited to these Examples.

### (1) The protocol for measuring a density or a melt flow rate is as follows.

### (1-1) Density (unit: kg/m³) of ethylene polymer

After the annealing treatment described in JIS K6760-1995 was performed, the density (unit: kg/m³) of each ethylene polymer was measured according to Method A described in JIS K7112-1980.

### (1-2) Melt flow rate (MFR, unit: g/10 min) of ethylene polymer

The MFR (unit: g/10 min) of the ethylene polymer was measured by Method A according to JIS K7210-1-2014 under conditions at a temperature of 190°C and a load of 2.16 kg.

### (2) Materials used in Examples and Comparative Examples are as follows.

### (2-1) Ethylene polymer

### ·Ethylene polymer 1

An ethylene-hexene copolymer, trade name "SUMIKATHENE E (registered trademark) FV103" manufactured by Sumitomo Chemical Co., Ltd.; production method: gas phase polymerization using a metallocene catalyst; density: 903 kg/m³; MFR: 1.1 g/10 min

### ·Ethylene polymer 2

An ethylene-hexene copolymer, trade name "SUMIKATHENE E (registered trademark) FV401" manufactured by Sumitomo Chemical Co., Ltd.; production method: gas phase polymerization using a metallocene catalyst; density: 904 kg/m³; MFR: 3.8 g/10 min

### ·Ethylene polymer 3

An ethylene-hexene copolymer, trade name "SUMIKATHENE E (registered trademark) FV205" manufactured by Sumitomo Chemical Co., Ltd.; production method: gas phase polymerization using a metallocene catalyst; density: 920 kg/m³; MFR: 2.1 g/10 min

### ·Ethylene polymer 4

An ethylene-hexene copolymer, trade name "SUMIKATHENE E (registered trademark) FV203" manufactured by Sumitomo Chemical Co., Ltd.; production method: gas phase polymerization using a metallocene catalyst; density: 913 kg/m³; MFR: 2.0 g/10 min

### (2-2) Base material film

### ·Base material film 1

A uniaxially stretched polyethylene film, trade name "Hiblon PM" manufactured by TOKYO PRINTING INK MFG. CO., LTD.; thickness: 25 µm; single-sided corona treatment

### (2-3) Adhesive for dry lamination

### ·Dry lamination-use adhesive 1

Adhesive for dry lamination (Production method: obtained by mixing 10 parts by mass of TAKELAC (registered trademark) A525 (manufactured by Mitsui Chemicals, Inc.), 1 part by mass of TAKENATE (registered trademark) A-52 (manufactured by Mitsui Chemicals, Inc.), and 15 parts by mass of ethyl acetate)

### ·Dry lamination-use adhesive 2

Adhesive for dry lamination (Production method: obtained by mixing 12 parts by mass of TAKELAC (registered trademark) A310 (manufactured by Mitsui Chemicals, Inc.), 1 part by mass of TAKENATE (registered trademark) A-3 (manufactured by Mitsui Chemicals, Inc.), and 15 parts by mass of ethyl acetate)

### (3) The dynamic elastic modulus (unit: Pa) of the adhesive layer was measured as follows.

The adhesive for dry lamination was air-dried on a Teflon (registered trademark) sheet to obtain an adhesive thin film. The obtained adhesive thin film was vacuum-heat-pressed at 230°C to prepare a press sheet having a thickness of 0.3 mm. The resulting sheet was sampled to a test piece width of 3 mm and a test piece length of 50 mm, and the dynamic elastic modulus was measured using an RSA-G2 at a distance between chucks of 20 mm and at a temperature of 30 to 230°C, a temperature rise rate of 3°C/min, a frequency of 5 Hz, and a strain of 0.5%.

### (4) Procedures for evaluating various physical properties are as follows.

### (4-1) Tensile test

The melt-kneaded product was hot-pressed at a thickness of 0.1 mm to give a press sheet. The press sheet was punched with a JIS7114-2 dumbbell to obtain a test piece. By using an impact tester (CIT-150-T-20) manufactured by ORIENTEC CO., LTD., a tensile test of the test piece was performed at a grip interval of 80 mm and a tensile speed of 200 mm/min in an atmosphere at 23°C and a humidity of 50% to determine the tensile fracture strength and the tensile fracture elongation.

### (4-2) Heat-sealing peel strength (unit: N/15 mm)

The melt-kneaded product was hot-pressed at a thickness of 0.1 mm to give a press sheet. The resulting press sheets were layered on each other, and the films were pressure-bonded to each other at a predetermined heat seal bar temperature and a pressure of 1 kPa for 1 second while using a heat sealer (TP-701S, manufactured by TESTER SANGYO CO,. LTD.) equipped with a heat seal bar having a width of 10 mm to perform heat sealing. The films after heat sealing were conditioned at 23°C and a humidity of 50% all day and night. Next, the films were cut out so that the width of the heat-sealed part was 15 mm. The unsealed portions of the two heat-sealed films facing each other were each set on a chuck of a tensile tester (manufactured by ORIENTEC CO., LTD). Then, the films were peeled at 23°C, a humidity of 50%, a peeling rate of 200 mm/min, and a peeling angle of 180 degrees to determine the heat-sealing peel strength. The above test was performed at a temperature of the heat seal bar of 160°C.

### [Example 1]

A sealant film of ethylene polymer 1 having a thickness of 80 µm was molded using an inflation film molding machine (manufactured by Placo Co., Ltd ). Subsequently, a surface of the obtained film was subjected to corona treatment to prepare sealant film 1. The molding conditions and corona treatment conditions were as follows. Table 1 shows the layer configuration of sealant film 1.

### <Molding Conditions>

·Extruder: φ50 mm × 3 extruders
·Die: φ150 mm, lip: 2.0 mmt
·Set temperature of die: 180 to 190°C
·Processing temperature of sealant film: 180 to 190°C
·Extrusion conditions of sealant film: 30 kg/hour

### <Corona Treatment Conditions>

·Processor: Wedge AGF-B 10 model
·Corona output: 0.15 kW

The corona-treated surface of the base film 1 and the corona-treated surface of the sealant film 1 were bonded to each other via the dry lamination-use adhesive 1 by a dry lamination process to prepare laminated film 1. Table 2 shows the layer configuration of the laminated film 1.

Here, 40 g of the laminated film 1 was melt-kneaded at a kneading temperature of 170°C and a rotation speed of 25 rpm for 10 minutes in a Labo Plastomill (model: 3S150) manufactured by Toyo Seiki Seisaku-sho, Ltd. In this way, melt-kneaded product 1 was thus obtained. The melt-kneaded product 1 was hot-pressed at 150°C to prepare a press sheet, and physical properties thereof were evaluated. Table 3 shows the evaluation results.

### [Example 2]

A sealant film was molded in the same manner as in Example 1 except that the ethylene polymer 2 was used instead of the ethylene polymer 1 to obtain sealant film 2. Table 1 shows the layer configuration of sealant film 2.

Laminated film 2 was obtained under the same conditions as in Example 1 except that the sealant film 2 was used instead of the sealant film 1. Table 2 shows the layer configuration of the laminated film 2. Melt-kneaded product 2 was obtained under the same conditions as in Example 1 except that the laminated film 1 was changed to the laminated film 2. The melt-kneaded product 2 was hot-pressed at 150°C to prepare a press sheet, and physical properties thereof were evaluated. Table 3 shows the evaluation results.

### [Comparative Example 1]

Laminated film 3 was obtained under the same conditions as in Example 1 except that the dry lamination-use adhesive 1 was changed to the dry lamination-use adhesive 2. Table 2 shows the layer configuration of the laminated film 3. Melt-kneaded product 3 was obtained under the same conditions as in Example 1 except that the laminated film 1 was changed to the laminated film 3. The melt-kneaded product 3 was hot-pressed at 150°C to prepare a press sheet, and physical properties thereof were evaluated. Table 3 shows the evaluation results.

### [Comparative Example 2]

A sealant film was molded in the same manner as in Example 1 except that the ethylene polymer 3 was used instead of the ethylene polymer 1 to produce sealant film 3. Table 1 shows the layer configuration of sealant film 3.

Laminated film 4 was obtained under the same conditions as in Example 1 except that the sealant film 3 was used instead of the sealant film 1. Table 2 shows the layer configuration of the laminated film 4. Melt-kneaded product 4 was obtained under the same conditions as in Example 1 except that the laminated film 1 was changed to the laminated film 4. The melt-kneaded product 4 was hot-pressed at 150°C to prepare a press sheet, and physical properties thereof were evaluated. Table 3 shows the evaluation results.

### [Comparative Example 3]

A sealant film was molded in the same manner as in Example 1 except that the ethylene polymer 4 was used instead of the ethylene polymer 1 to produce sealant film 4.

Laminated film 5 was obtained under the same conditions as in Example 1 except that the sealant film 4 was used instead of the sealant film 1. Table 2 shows the layer configuration of the laminated film 5. Melt-kneaded product 5 was obtained under the same conditions as in Example 1 except that the laminated film 1 was changed to the laminated film 5. The melt-kneaded product 5 was hot-pressed at 150°C to prepare a press sheet, and physical properties thereof were evaluated. Table 3 shows the evaluation results.

**[Table 1]**

| | | Sealant film | | | |
|---|---|---|---|---|---|
| | | 1 | 2 | 3 | 4 |
| Layer configuration | Ethylene polymer 1 (parts by mass) | 100 | 0 | 0 | 0 |
| | Ethylene polymer 2 (parts by mass) | 0 | 100 | 0 | 0 |
| | Ethylene polymer 3 (parts by mass) | 0 | 0 | 100 | 0 |
| | Ethylene polymer 4 (parts by mass) | 0 | 0 | 0 | 100 |
| | Thickness (µm) | 80 | 80 | 80 | 80 |

**[Table 2]**

| | | Laminated film | | | | |
|---|---|---|---|---|---|---|
| | | 1 | 2 | 3 | 4 | 5 |
| Layer configuration | Base material film | 1 | | | | |
| | Adhesive layer for dry lamination | 1 | 1 | 2 | 1 | 1 |
| | Sealant film | 1 | 2 | 1 | 3 | 4 |

**[Table 3]**

| | | Example 1 | Example 2 | Comparative Example 1 | Comparative Example 2 | Comparative Example 3 |
|---|---|---|---|---|---|---|
| Melt-kneaded product | | 1 | 2 | 3 | 4 | 5 |
| Production conditions | Laminated film | 1 | 2 | 3 | 4 | 5 |
| | Melt-kneading temperature (°C) | 170 | | | | |
| | Temperature (°C) at which elastic modulus of adhesive layer is 10⁴ Pa | 70.7 | 70.7 | 213.0 | 70.7 | 70.7 |
| Results | Tensile fracture strength (Mpa) | 34 | 26 | 18 | 24 | 32 |
| | Tensile fracture elongation (%) | 452 | 394 | 272 | 329 | 419 |
| | Heat-sealing peel strength (N) | 11.3 | 12.1 | 1.4 | 0.9 | 0.4 |

Table 3 shows that the press sheets of Examples 1 and 2 each obtained by melt-kneading the laminated body satisfying all the constituent requirements of the present invention had higher values of tensile fracture strength, tensile fracture elongation, and heat-sealing peel strength than the press sheets of Comparative Example 1 to 3. Therefore, it has been demonstrated that the laminated body of the present invention has relatively good tensile fracture strength, tensile fracture elongation, and heat-sealing peel strength after recycling, and is thus suitable for recycling.

### INDUSTRIAL APPLICABILITY

The laminated body of the present invention is a laminated body that makes it possible to obtain a recycled material having relatively good tensile fracture strength, tensile fracture elongation, and heat-sealing peel strength after recycling. Therefore, it is suitably used for various packaging materials suitable for material recycling, for example, daily necessities packaging materials, food packaging materials, and so on. In addition, as an embodiment, for example, it is suitably used for a three-way bag, a four-way bag, a standing pouch, a pillow bag, or the like.

## Claims

1. A laminated body comprising a substrate layer, an adhesive layer, and a sealant layer laminated in this order, wherein
the adhesive layer has a temperature at which the elastic modulus of the adhesive layer becomes 10,000 Pa is 60°C or higher and 200°C or lower,
the substrate layer comprises polyethylene having a density of 936 kg/m³ or higher and 980 kg/m³ or less, and is subjected to orientation processing, and
the sealant layer comprises polyethylene having a density of 880 kg/m³ or higher and less than 910 kg/m³.

2. The laminated body according to claim 1, wherein the adhesive layer is any one of an epoxy-based adhesive layer, an acrylic adhesive layer, a urethane-based adhesive layer, or a silicone-based adhesive layer.

3. The laminated body according to claim 1 or 2, wherein the sealant layer has a thickness of 10 µm or more and 200 µm or less.

4. The laminated body according to claim 1 or 2, wherein the sealant layer comprises polyethylene having a melt flow rate of 0.01 g/10 min or more and less than 5 g/10 min as measured at a temperature of 190°C under a load of 2.16 kg.

5. A melt-kneaded product obtained by melt-kneading the laminated body according to claim 1 or 2.

6. A method for obtaining a melt-kneaded product by melt-kneading the laminated body according to claim 1 or 2.
